# EUROPEAN PATENT SPECIFICATION

(11) **EP 1 533 530 B1**
(45) Date of publication and mention of the grant of the patent: **26.04.2006**
(21) Application number: 03425741.0
(22) Date of filing: 18.11.2003
(51) Int. Cl.: F04D 29/66, F04D 19/04, F16F 15/00

(54) **Vacuum pump provided with vibration damper**
Vakuumpumpe mit Schwingungsdämpfer
Pompe à vide avec amortisseur de vibrations

(43) Date of publication of application: 25.05.2005
(73) Proprietor: VARIAN S.p.A., 10040 Leini' (Torino) (IT)
(72) Inventor: Leva, Alberto Dpt. di Elettronica e Informazione, Piazza Leonardo da Vinci, 32 20133Milano (IT); Piroddi, Luigi Dpt. di Elettronica e Informazione, Piazza Leonardo da Vinci, 32 20133Milano (IT); Casaro, Fausto, 10141 Torino (IT)
(74) Representative: Robba, Pierpaolo

(56) References cited:
- EP-A- 0 197 238
- EP-A- 0 875 694
- DE-A- 19 702 518
- US-A- 3 759 626

## Description

The present invention relates to a vacuum pump provided with a vibration damper.

More particularly, the present invention relates to a turbomolecular pump provided with a damper attenuating the propagation of vibrations induced by the rotation of the pump rotor to an external unit to which the pump is connected, said unit possibly being the chamber in which it is desired to create vacuum conditions.

As known, several applications exist in which the chamber where vacuum conditions are to be created and to which the vacuum pump is connected to this aim is particularly sensible to the mechanical vibrations inevitably generated by the rotation of the pump rotor. We mention for instance the case of electron microscopes and of the systems for measuring and repairing the masks necessary for manufacturing integrated electronic circuits.

In order to reduce the transmission of mechanical stresses from the pump to the vacuum chamber, some manufacturers have since a long time replaced the conventional mechanical bearings with magnetic bearings or suspensions. Yet, also the use of magnetic suspensions does not always allow damping the pump-generated vibrations down to the desired levels.

It is also to be taken into account that, in case of turbomolecular pumps, used in applications demanding high vacuum degrees, said vacuum pumps do not discharge directly to the external environment, but they are connected to a forepump. Thus, it is necessary to take into account also the vibrations generated by said forepump and transmitted to the vacuum pump and from the latter to the vacuum chamber.

For those reasons, the vacuum pump is often equipped with a vibration damper connected between the pump and the vacuum chamber.

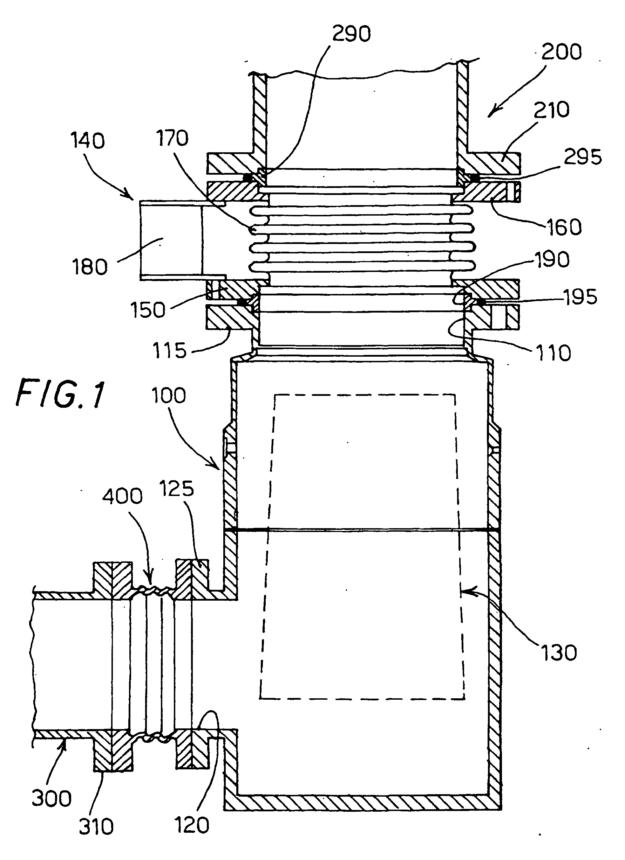

According to the prior art, and referring to Fig. 1, a vacuum pump 100 has an inlet port 110, a discharge port 120 and gas pumping means 130 that, in case of turbomolecular pumps, consist of a set of pumping stages each comprising a rotor disc cooperating with a corresponding stator ring. An example of a turbomolecular pump is disclosed in EP 522 603. A flange 115 is provided in correspondence with said inlet port 110 for coupling with flange 210 of chamber 200 where vacuum conditions are to be created. A similar flange 125 is provided in correspondence with discharge port 120 for coupling with a forepump 300, generally through a flanged bellows 400. According to the prior art, vibration dampers 140 are for instance connected between said pump 100 and said chamber 200. They essentially comprise a first flange 150 coupled with said flange 115 of said pump 100, a second flange 160 coupled with said flange 210 of vacuum chamber 200, a flexible steel bellows 170 ensuring vacuum tightness, and a plurality of rubber members 180 (three in the embodiment shown in Fig. 1), uniformly spaced around said bellows 170 along the circumferences of said flanges 150, 160 and ensuring damping of the mechanical vibrations transmitted by pump 100.

Rings 190, 290 are provided between the flanges to allow centring O-rings 195, 295 intended to ensure vacuum tightness between the flanges.

A similar damper could also be used downstream vacuum pump 100 and be connected between flange 125 of the discharge port of said pump and flange 310 of the inlet port of forepump 300.

It is clear that said rubber members 180 used according to the prior art form a passive damper, which attenuates vibration propagation from the pump to the vacuum chamber only in part and in small frequency ranges.

Such a passive damper is disclosed, for instance, in US 3,759,626, wherein rubber means made of a material of high internal damping, and more particularly of resilient synthetic substances such as Perbunan, Vulkollan or Viton are employed.

It is a main object of the present invention to provide a vacuum pump equipped with a mechanical vibration damper having improved characteristics.

It is another object of the present invention to provide a vacuum pump equipped with a small-size, reliable and cheap damper.

The above and other objects are achieved by a vacuum pump as claimed in the appended claims.

Advantageously, the vacuum pump according to the invention comprises a damper exploiting piezoelectric actuators.

Piezoelectric devices are devices that, when fed with a suitable voltage, are capable of generating a force whose intensity depends on the applied voltage and hence is controllable. Conversely, said devices can be used to generate a voltage signal proportional to a possible applied force.

DE 197 02 518 disclose a damper exploiting piezoelectric elements for applications to the field of motor vehicles.

Nevertheless, due to the specific problems related to the field of vacuum pumping, first of all the need for vacuum-tight connection between the vacuum pump and the damper and between the damper and the vacuum chamber, dampers known and used in generic mechanical structures, such as the damper disclosed in DE 197 02 518, can not be merely applied to a vacuum pumping system.

By using piezoelectric actuators it is therefore possible to control said actuators so that they impart a vibration of substantially the same amplitude as that measured onboard the vacuum pump but in phase opposition thereto, whereby a substantially null resulting vibration is obtained.

According to an embodiment, said piezoelectric actuators are arranged around the metal bellows, in place of the conventional rubber members.

According to another embodiment, said piezoelectric actuators may be directly mounted on the flange of the inlet and/or discharge port of the vacuum pump, around the centring ring and the O-ring, so that the metal bellows and the related flanges can be dispensed with, thereby reducing the axial size of the pump-damper assembly.

Some preferred embodiments of the vacuum pump according to the invention, given by way of non limiting example, will be described in more detail hereinafter, with reference to the accompanying drawings, in which:
- Fig. 1 is a longitudinal sectional view of a vacuum pump equipped with a prior art damper;
- Fig. 2 is a longitudinal sectional view of the damper according to a first embodiment of the invention;
- Fig. 3a is a block diagram of a first embodiment of a control logic for the damper;
- Fig. 3b is a block diagram of a second embodiment of a control logic for the damper;
- Fig. 4a is a block diagram of a third embodiment of a control logic for the damper;
- Fig. 4b is a block diagram of a fourth embodiment of a control logic for the damper;
- Fig. 5a is a partial cross-sectional view of the damper according to a second embodiment of the invention;
- Fig. 5b is a partial cross-sectional view of a detail of the damper of Fig. 5a, according to a variant embodiment;
- Fig. 6a is a plan view of the damper according to a third embodiment of the invention;
- Fig. 6b is a cross-sectional view, taken along line B-B, of the damper of Fig. 6a;
- Fig. 6c is a cross-sectional view, taken along line C-C, of the damper of Fig. 6a;
- Fig. 6d is a cross-sectional view, taken along line B-B, of the damper of Fig. 6a, according to a variant embodiment;
- Fig. 7a is a plan view of the damper according to a fourth embodiment of the invention;
- Fig. 7b is a cross-sectional view, taken along line B-B, of the damper of Fig. 7a;
- Fig. 8a is a plan view of the damper according to a fifth embodiment of the invention;
- Fig. 8b is a cross-sectional view. taken along line B-B, of the damper of Fig. 8a.

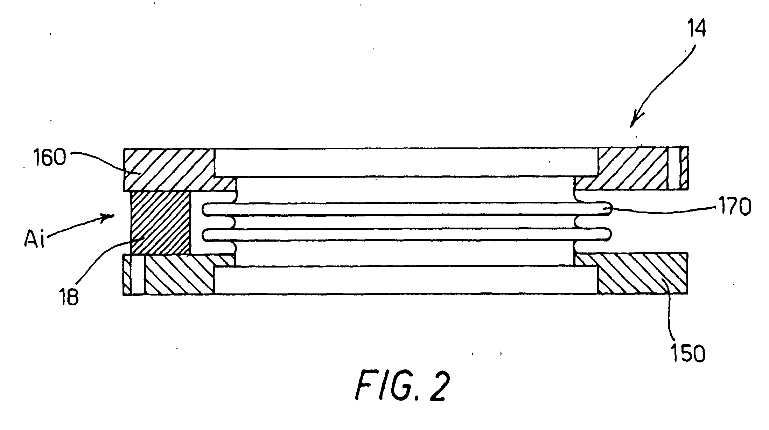

Referring to Fig. 2, there is shown a vibration damper 14 according to the invention, which is to be mounted, by means of corresponding flanges 150, 160, between a vacuum pump 100 and a chamber 200 where vacuum is to be created.

Said damper 14 further comprises a vacuum-tight steel bellows 170 arranged between said flanges 150, 160. Piezoelectric actuators Aᵢ, which in this embodiment consist of parallelepiped or cylindrical blocks 18, are arranged around said bellows. Preferably said piezoelectric actuators Ai are uniformly arranged around said bellows 170: for instance, three actuators, spaced apart by 120°, are provided.

Said actuators Aᵢ are actively controlled through a driving signal capable of generating vibrations substantially equal and opposite to the vibrations which are produced onboard the vacuum pump and are measured by corresponding sensors, and which are not to be transmitted to vacuum chamber 200.

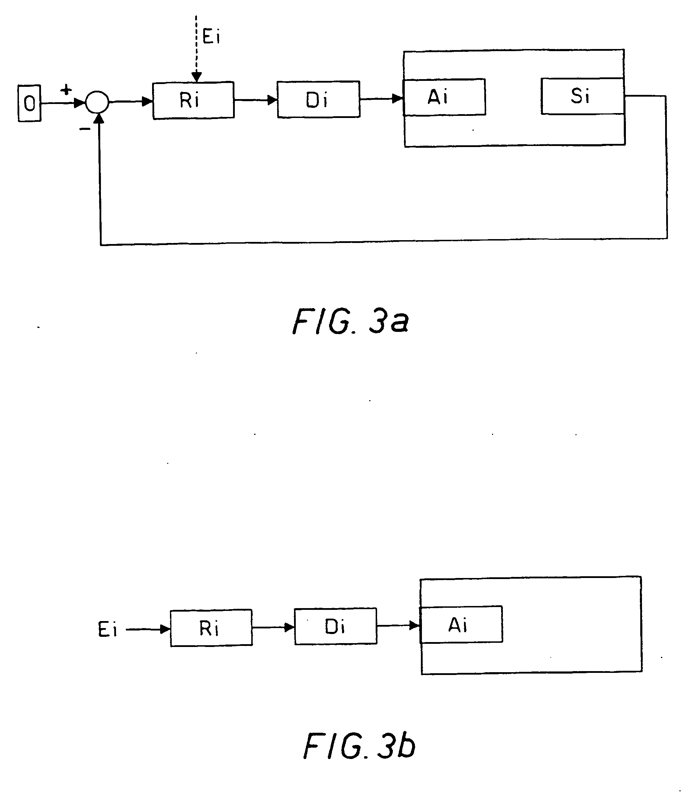

Referring to Fig. 3a, a first embodiment of the control logic of actuators Aᵢ will be disclosed, in which an independent closed-loop control system is provided for each sensor-actuator pair. Each control system includes a single-variable regulator Rᵢ, implemented in analogue or digital technology, which receives from a corresponding sensor Sᵢ, for instance an accelerometer, the value of the corresponding acceleration measured at the pump. Depending on such value, regulator Rᵢ determines the suitable signal to be sent to driver Dᵢ acting upon the corresponding piezoelectric actuator Aᵢ. Possibly, the control signals from regulator Rᵢ may also depend on external quantities Eᵢ different from those measured by sensors Sᵢ.

Said external quantities Eᵢ may represent the external disturbances acting on the system, and measurement thereof may serve to implement an open-loop feed-forward control. A corresponding implementing diagram of the control logic of actuators Aᵢ, shown in Fig. 3b, allows compensating said external disturbances before they affect the vibrations. Such a result can be obtained by implementing inside the regulator an accurate mathematical model capable of predicting the effects of said disturbances on the mechanical system.

Generally the same piezoelectric actuators Aᵢ are capable of acting as sensors for detecting an acceleration: thus, other piezoelectric members, with the same structure as the actuators but acting as vibration sensors, can be used in place of the usual accelerometers. By uniformly distributing a sufficient number of piezoelectric members Aᵢ along the circumferences of flanges 150, 160, the even-position members could for instance be used as actuators and the odd-position members as drivers.

Of course, also in case actual accelerometers are used, it will be convenient to uniformly arrange a sufficient number of said accelerometers along the circumferences of said flanges 150, 160, by alternating the accelerometers with said piezoelectric actuators Aᵢ.

Said regulators Rᵢ can possibly act more effectively if vibration detection is carried out at the point where the actuator force is applied: in such case, sensors and actuators may be located as close as possible to one another, as it will be disclosed in more detail below.

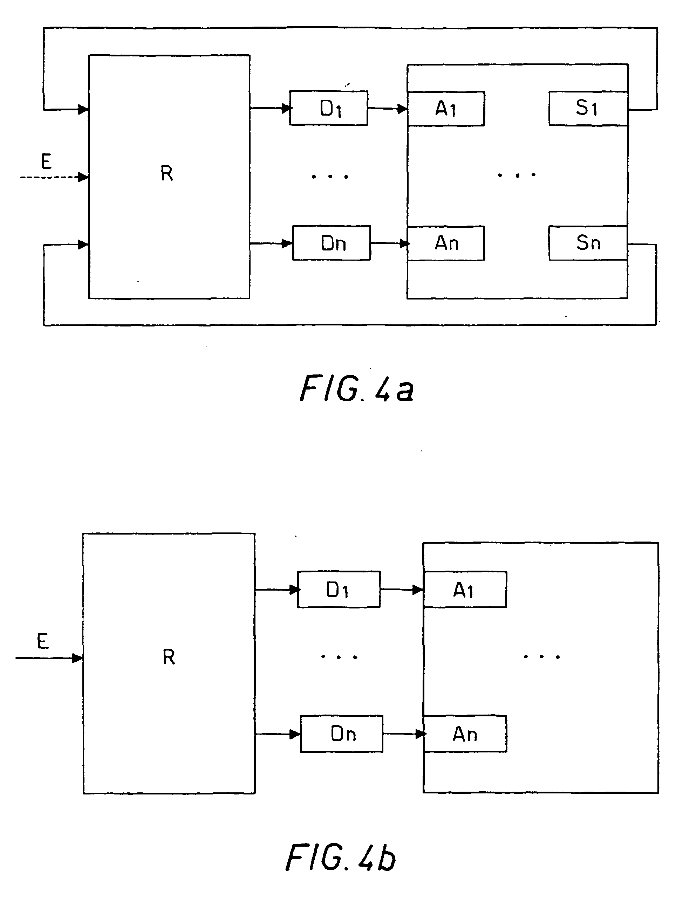

Referring to Fig. 4a, a third embodiment of the control logic of actuators Aᵢ will be disclosed, in which there is provided a plurality of vibration sensors S₁...Sₙ mounted onboard pump 100, a plurality of drivers D₁...Dₙ capable of controlling piezoelectric actuators Aᵢ...Aₙ, and a multi-variable regulator R.

Said regulator R, implemented in analogue or digital technology, receives the signals representative of the vibrations from the vacuum pump, through sensors S₁...Sₙ. Depending on such signals, regulator R determines the control signals to be fed to drivers D₁...Dₙ acting on piezoelectric actuators Aᵢ...Aₙ. Said actuators generate a vibration that depends on the signal sent by regulator R, said signal being chosen so that the vibration produced is substantially equal and opposite to that measured by said sensors S₁...Sₙ.

Also in this case, the control logic is a closed-loop logic. Moreover, it is possible to make such control signals depend also on other quantities E measured at the pump.

Similarly to what disclosed above in connection with the single-variable regulators Rᵢ, an implementing diagram of the control logic of actuators Aᵢ providing for an open-loop feed-forward control, as shown in Fig. 4b, may be envisaged also when a multi-variable regulator R is used.

Regulator R is a multi-variable regulator in which the control law for drivers Dᵢ is the same for all actuators Aᵢ and depends on the signals coming from all sensors Sᵢ.

In the alternative, said regulator R might be implemented as a cascade of as many single-variable regulators Rᵢ as the sensor-actuator pairs are, and of a final multi-variable synthesis block.

It is to be appreciated that sensors Sᵢ need not to be as many as the piezoelectric actuators Aᵢ are, even if for constructive reasons using the same number of sensors Sᵢ and actuators Aᵢ is convenient.

Thanks to the optimum performance attainable by the control systems described above, piezoelectric actuators of very small size (i.e. much smaller than those of the conventional rubber members) can be used to dampen the vibrations measured on the vacuum pump. Thus, it is possible to have embodiments of the invention allowing reducing the axial size of the vacuum pump and its damper. Moreover, said embodiments could allow improving the pumping characteristics of the pump-damper assembly, by reducing the flow resistance.

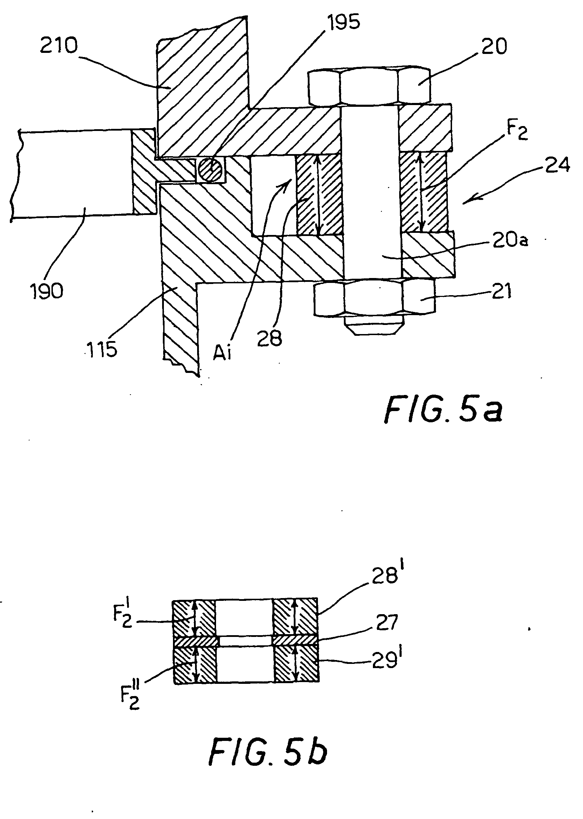

Fig. 5a shows part of a damper 24 of a vacuum pump according to a second embodiment of the invention.

In this embodiment, flange 115 of the vacuum pump inlet port is directly coupled with counterflange 210 of a vacuum chamber through securing screws 20 uniformly distributed along the circumference of said flange 115, around centring ring 190 and the corresponding O-ring 195, and through corresponding securing nuts 21.

Piezoelectric actuators Aᵢ are formed by cylindrical washers 28 mounted around stems 20a of securing screws 20, in contact with said flange 115 on the one side and with said counterflange 210 on the other side. Thus, the axial thrust (shown by arrows F₂) of said actuators 28 can be effective on the one side on the pump and on the other side on the vacuum chamber, thereby compensating the axial vibrations measured onboard the pump and resulting in a reduction of the transmitted vibration.

In this second embodiment metal bellows 170 and the corresponding flanges 150, 160 can therefore be dispensed with, with a consequent reduction of the axial size of the pump-damper assembly.

Also in this second embodiment the vibrations can be measured by accelerometers mounted onboard the pump. Similarly to the preceding embodiment, damper 24 may comprise a plurality of piezoelectric members Ai used as sensors. Also said sensors preferably consist of washers arranged around stems 20a of securing screws and alternating with said piezoelectric actuators along the circumference of damper 24.

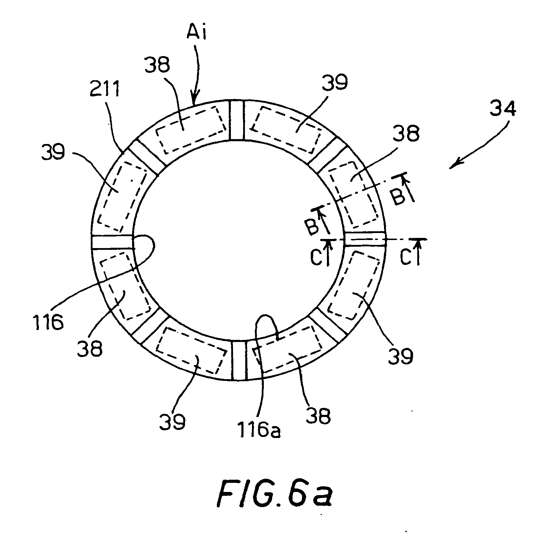

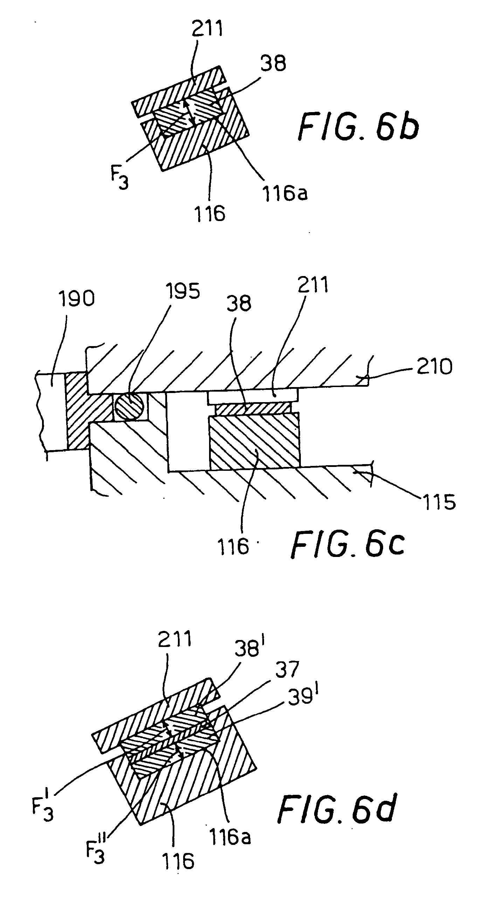

Figs. 6a to 6c show a third embodiment of the invention.

In that third embodiment, piezoelectric actuators Aᵢ are formed by parallelepiped or cylindrical blocks 38 mounted between a pair of circular supports 116, 211, directly located between flange 115 of the vacuum pump inlet port and counterflange 210 of a vacuum chamber, around centring ring 190 and the corresponding O-ring 195 ensuring vacuum tightness, similarly to the embodiment shown in Fig. 5a.

Preferably, support 116 comprises suitable seats 116 receiving said actuators 38. As shown by arrow F₃ in Fig. 6b, thanks to such an arrangement, the axial thrust of piezoelectric actuators 28 can be directly transmitted to the vacuum pump and the vacuum chamber through respective flanges 115, 210, whereby a substantially null resulting vibration is obtained.

In this embodiment also the metal bellows and the corresponding flanges are eliminated, with a substantial reduction of the overall axial size of the pump-damper assembly.

Even though the vibrations can be detected by accelerometers mounted on the vacuum pump, Fig. 6a shows an alternative solution, already mentioned hereinbefore, in which damper 34 comprises piezoelectric sensors 39. Said sensors consist of piezoelectric parallelepiped or cylindrical plates, of the same kind as used for actuators 38, and are arranged along the circumference of support 116 alternated with said actuators 38.

In the embodiments disclosed up to now, piezoelectric actuators Aᵢ are mounted so as to attenuate transmission of axial vibrations from vacuum pump 100 to vacuum chamber 200.

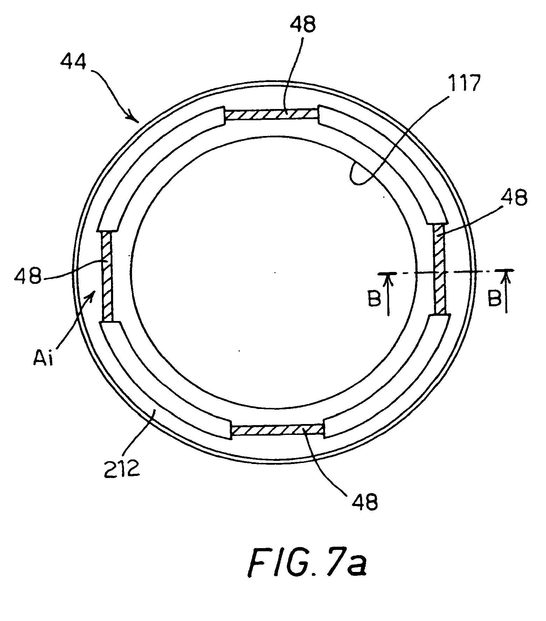

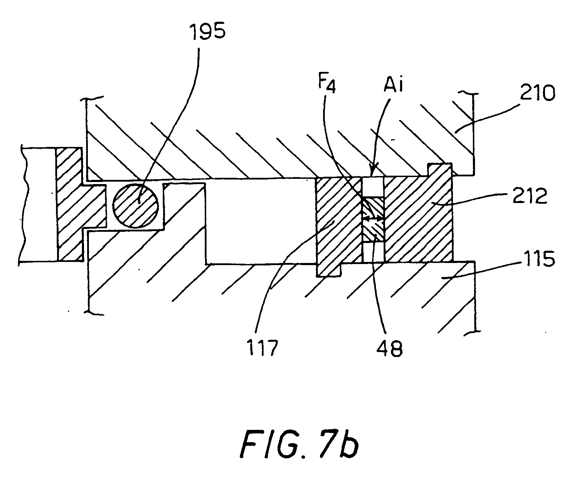

Figs. 7a and 7b show a fourth embodiment of the invention, where a damper 44 according to the invention comprises piezoelectric actuators Aᵢ, consisting of parallelepiped or cylindrical plates 48, which can be used to prevent transmission of radial vibrations.

In that embodiment, piezoelectric actuators 48 are mounted between a pair of circular supports 117, 212 located between said flange 115 and said counterflange 210, so that they can exert a radial thrust on said flanges 115, 210 (as shown by arrows F₄ in Fig. 7b).

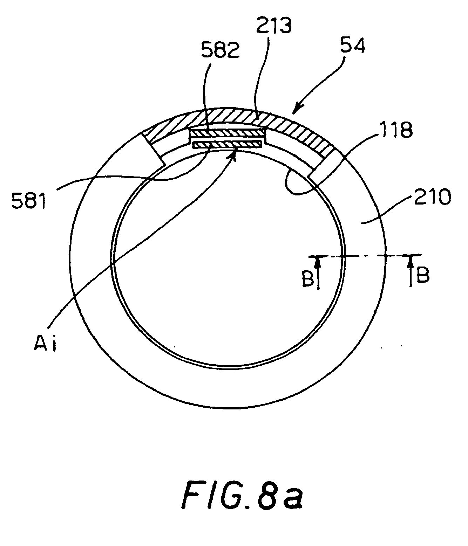

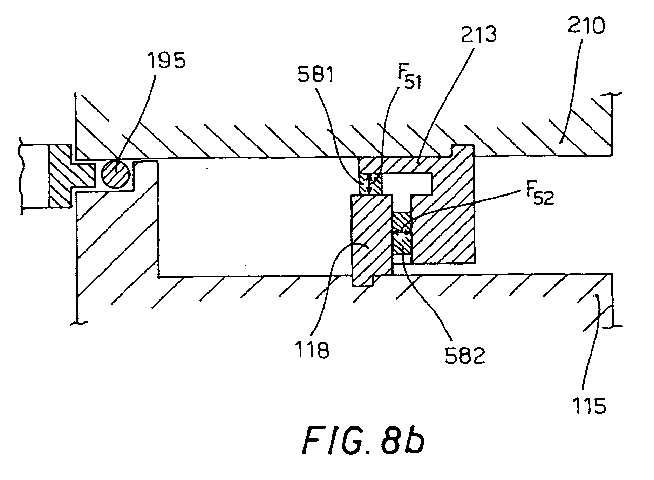

Figs. 8a, 8b show a pump arrangement according to a fifth embodiment of the invention, comprising first and second piezoelectric actuators 581, 582 capable of dampening axial vibrations and radial vibrations, respectively (as shown by arrows F₅₁, F₅₂ in Fig. 8b).

In order said first and second piezoelectric actuators 581, 582 can exert an axial thrust and a radial thrust, respectively, on the vacuum pump and the vacuum chamber connected to the pump, said vacuum chamber is connected through flange 210 to a support 213 shaped so as to have a pair of mutually orthogonal walls facing corresponding orthogonal walls of a corresponding support 118 connected to flange 115 of the vacuum pump.

Thus, piezoelectric actuators 581, 582 can be mounted so that said first actuators 581 are in contact at their bottom ends with support 118 connected to the vacuum pump and at their top ends with support 213 connected to flange 210 of the vacuum chamber, whereby they are capable of transmitting an axial thrust, and so that said second actuators 582 are in contact at their inner sides with support 118 connected to flange 115 of the vacuum pump and at their outer sides with support 213 connected to flange 210 of the vacuum chamber, whereby they are capable of transmitting a radial thrust.

Said first and second actuators 581, 582 consist of piezoelectric parallelepiped or cylindrical plates uniformly arranged along the circumference of flange 115.

In this embodiment also the pump vibrations can be detected by accelerometers mounted on the pump. In the alternative, damper 54 may comprise first and second piezoelectric members Ai used as sensors to detect axial vibrations and radial vibrations, respectively.

In a further variant embodiment of the invention, instead of alternating piezoelectric actuators and sensors along the circumference of vacuum pump flange 115, integrated pairs of piezoelectric members are used, one member acting as a sensor and the other as an actuator.

An example of said variant embodiment is shown in Fig. 6d, with reference to a damper of the kind shown in Figs. 6a to 6c.

A piezoelectric sensor 39' and a piezoelectric actuator 38', separated by a plate 37, are received in each seat 115a formed in flange 115. Arrows F₃', F₃" denote the operational directions of said sensor and said actuator, respectively, which are therefore coaxially mounted.

Fig. 5b shows an example of said variant relevant to the second embodiment of the invention shown in Fig 5a. A piezoelectric sensor 28' and a piezoelectric actuator 29', both consisting of a washer, are stacked on stem 20a of each screw 20 and are separated by a washer 37. Arrows F₂', F₂" denote the operational directions of said sensor and actuator, respectively, which are therefore coaxially mounted.

It is clear that this variant embodiment of the invention affords considerable advantages in terms of accuracy in vibration damping, since the actuator that is to prevent vibration transmission is located exactly at the same position where said vibrations are detected.

Even if the above description refers to a vacuum pump equipped with a damper located at the input port, in order to attenuate vibrations transmitted from the vacuum pump to a vacuum chamber, a similar damper could be for instance located also at the discharge port, to attenuate vibration transmission from the forepump to said vacuum pump or between the pump and other external units.

## Claims

1. A vacuum pump (100) having an inlet port (110), a discharge port (120), means (130) for pumping a gas from said inlet port to said discharge port, and a vibration damper (14; 24; 34; 44; 54) for attenuating vibration transmission from said pump to an external unit and/or vice versa said external unit being either a vacuum chamber or a second vaccum pump **characterised in that** said damper comprises at least one piezoelectric actuator (Ai).

2. A vacuum pump as claimed in claim 1, wherein at least a sensor (Si) is provided capable of producing a measure of the vibrations for controlling said at least one piezoelectric actuator.

3. A vacuum pump as claimed in claim 1, wherein said damper (14; 24; 34; 44; 54) is positioned in correspondence with at least one of said input or discharge ports (110, 120) of said pump.

4. A vacuum pump as claimed in claim 3, wherein said damper further comprises a vacuum-tight bellows (17) equipped at its ends with a first and a second flange (150, 160), said first flange and said second flange being for coupling the damper to said pump and said external unit, respectively.

5. A vacuum pump as claimed in claim 4, wherein said damper (14) comprises a plurality of piezoelectric actuators (18), preferably of parallelepiped or cylindrical shape, uniformly distributed around said bellows (17), between said first flange and said second flange.

6. A vacuum pump as claimed in claim 2, wherein said sensors are piezoelectric sensors.

7. A vacuum pump as claimed in claims 5 and 6, wherein said sensors and said actuators are uniformly distributed around said bellows.

8. A vacuum pump as claimed in claim 3, wherein said actuators comprise corresponding washers mounted around the securing screws (20) keeping said pump and said external unit joined together.

9. A vacuum pump as claimed in claim 2, wherein at least one of said piezoelectric actuators is coaxially mounted relative to at least one of said piezoelectric sensors.

10. A vacuum pump as claimed in claim 1, wherein said damper comprises first and second piezoelectric actuators (581, 582) arranged so as to dampen vibrations in two mutually perpendicular directions.

11. A vacuum pump as claimed in claim 10, wherein said vacuum pump (100) is a rotary pump and one of said directions correspond with the rotation axis of said vacuum pump.

12. A vacuum pump as claimed in claim 2, wherein said vacuum pump is equipped with a control system comprising at least one regulator (R; Rᵢ) for controlling one or more of said piezoelectric actuators (A₁...Aₙ), depending on the signals from said sensors (S₁...Sₙ).

13. A vacuum pump as claimed in claim 1, wherein said control system comprises at least one regulator (R; Rᵢ) for controlling one or more of said piezoelectric actuators (A₁...Aₙ) based on the value of external quantities (E₁...Eₘ) representative of the external disturbances acting on said pump.

14. A vacuum pump as claimed in any preceding claim, **characterised in that** said pump is a turbomolecular pump.

## Revendications

1. Pompe à vide (100) ayant un orifice d'entrée (110), un orifice de décharge (120), des moyens (130) pour pomper un gaz depuis ledit orifice d'entrée vers ledit orifice de décharge, et un amortisseur de vibrations (14 ; 24 ; 34 ; 44 ; 54) pour atténuer la transmission de vibrations depuis ladite pompe vers une unité externe et/ou vice versa, ladite unité externe étant soit une chambre à vide soit une seconde pompe à vide, **caractérisée en ce que** ledit amortisseur comprend au moins un actionneur piézoélectrique (Ai).

2. Pompe à vide selon la revendication 1, dans laquelle au moins un capteur (Si) est prévu, capable de produire une mesure des vibrations pour commander ledit au moins un actionneur piézoélectrique.

3. Pompe à vide selon 1a revendication 1, dans laquelle ledit amortisseur (14 ; 24 ; 34 ; 44 ; 54) est positionné en correspondance avec l'un au moins parmi ledit orifice d'entrée et ledit orifice de décharge (110, 120) de ladite pompe.

4. Pompe à vide selon la revendication 3, dans laquelle ledit amortisseur comprend en outre un soufflet étanche au vide (17) équipé à ses extrémités d'une première et d'une seconde bride (150, 160), ladite première bride et ladite seconde bride étant destinées à coupler l'amortisseur à ladite pompe et à ladite unité externe, respectivement.

5. Pompe à vide selon la revendication 4, dans laquelle ledit amortisseur (14) comprend une pluralité d'actionneurs piézoélectriques (18), de préférence de forme parallélépipédique ou cylindrique, uniformément distribués autour dudit soufflet (17) entre ladite première bride et ladite seconde bride.

6. Pompe à vide selon la revendication 2, dans laquelle lesdits capteurs sont des capteurs piézoélectriques.

7. Pompe à vide selon les revendications 5 et 6, dans laquelle lesdits capteurs et lesdits actionneurs sont uniformément distribués autour dudit soufflet.

8. Pompe à vide selon la revendication 3, dans laquelle lesdits actionneurs comprennent des rondelles correspondantes montées autour des vis de fixation (20) pour maintenir ladite pompe et ladite unité externe jointes ensemble.

9. Pompe à vide selon la revendication 2, dans laquelle l'un au moins desdits actionneurs piézoélectriques est monté coaxialement par rapport à l'un au moins desdits capteurs piézoélectriques.

10. Pompe à vide selon la revendication 1, dans laquelle ledit amortisseur comprend un premier et un second actionneur piézoélectrique (581, 582) agencés de manière à amortir des vibrations dans deux directions mutuellement perpendiculaires.

11. Pompe à vide selon la revendication 10, dans laquelle ladite pompe à vide (100) est une pompe rotative et l'une desdites directions correspond à l'axe de rotation de ladite pompe à vide.

12. Pompe à vide selon la revendication 2, dans laquelle ladite pompe à vide est équipée d'un système de commande comprenant au moins un régulateur (R ; Ri) pour commander un ou plusieurs desdits actionneurs piézoélectriques (A1, ..., An), en dépendance des signaux provenant desdits capteurs (S1, ..., Sn).

13. Pompe à vide selon la revendication 1, dans laquelle ledit système de commande comprend au moins un régulateur (R ; Ri) pour commander un ou plusieurs desdits actionneurs piézoélectriques (A1, ..., An) en se basant sur la valeur de quantités externes (E1, ..., En) représentatives des perturbations externes agissant sur ladite pompe.

14. Pompe à vide selon l'une quelconque des revendications précédentes, **caractérisée en ce que** ladite pompe est une pompe turbomoléculaire.

## Patentansprüche

1. Vakuumpumpe (100) mit einer Einlassöffnung (110), einer Auslassöffnung (120), einem Mittel (130) zum Pumpen eines Gases von der Einlassöffnung zur Auslassöffnung und einem Schwingungsdämpfer (14; 24; 34; 44; 54) zum Dämpfen der Schwingungsübertragung von der Pumpe zu einer externen Einheit und/oder umgekehrt, wobei die externe Einheit entweder eine Vakuumkammer oder eine zweite Vakuumpumpe ist, **dadurch gekennzeichnet, dass** der Dämpfer mindestens ein piezoelektrisches Stellglied (Aᵢ) umfasst.

2. Vakuumpumpe nach Anspruch 1, wobei mindestens ein Sensor (Sᵢ) bereitgestellt ist, der in der Lage ist, ein Maß für die Schwingungen zu erzeugen, um das mindestens eine piezoelektrische Stellglied zu regeln.

3. Vakuumpumpe nach Anspruch 1, wobei der Dämpfer (14; 24; 34; 44; 54) entsprechend mindestens der Einlass- oder der Auslassöffnung (110, 120) der Pumpe angeordnet ist.

4. Vakuumpumpe nach Anspruch 3, wobei der Dämpfer ferner einen vakuumdichten Faltenbalg (17) aufweist, der an seinen Enden mit einem ersten und einem zweiten Flansch (150, 160) ausgestattet ist, wobei der erste Flansch und der zweite Flansch zum Koppeln des Dämpfers mit der Pumpe bzw. der externen Einheit dienen.

5. Vakuumpumpe nach Anspruch 4, wobei der Dämpfer (14) eine Vielzahl von piezoelektrischen Stellgliedern (18) vorzugsweise mit Quader- oder zylindrischer Form, aufweist, die gleichmäßig um den Faltenbalg (17) zwischen dem ersten Flansch und dem zweiten Flansch verteilt sind.

6. Vakuumpumpe nach Anspruch 2, wobei die Sensoren piezoelektrische Sensoren sind.

7. Vakuumpumpe nach den Ansprüchen 5 und 6, wobei die Sensoren und die Stellglieder gleichmäßig um den Faltenbalg verteilt sind.

8. Vakuumpumpe nach Anspruch 3, wobei die Stellglieder entsprechende Zwischenlagscheiben aufweisen, die um die Befestigungsschrauben (20) montiert sind, die die Pumpe und die externe Einheit miteinander verbunden halten.

9. Vakuumpumpe nach Anspruch 2, wobei mindestens eines der piezoelektrischen Stellglieder relativ zu mindestens einem der piezoelektrischen Sensoren koaxial montiert ist.

10. Vakuumpumpe nach Anspruch 1, wobei der Dämpfer ein erstes und ein zweites piezoelektrisches Stellglied (581, 582) aufweist, die so angeordnet sind, dass sie Schwingungen in zwei zueinander senkrechten Richtungen dämpfen.

11. Vakuumpumpe nach Anspruch 10, wobei die vakuumpumpe (100) eine Rotationspumpe ist und eine der Richtungen der Drehachse der Vakuumpumpe entspricht.

12. Vakuumpumpe nach Anspruch 2, wobei die Vakuumpumpe mit einem Regelsystem ausgestattet ist, das mindestens einen Regler (R; Rᵢ) zum Regeln von einem oder mehreren der piezoelektrischen Stellglieder (A₁...Aₙ) in Abhängigkeit von den Signalen von den Sensoren (S₁...Sₙ) aufweist.

13. Vakuumpumpe nach Anspruch 1, wobei das Regelsystem mindestens einen Regler (R; Rᵢ) zum Regeln von einem oder mehreren der piezoelektrischen Stellglieder (A₁.. Aₙ) auf der Basis des Werts von externen Größen (E₁...Eₘ), die die externen Störungen darstellen, die auf die Pumpe wirken, aufweist.

14. Vakuumpumpe nach einem vorangehenden Anspruch, **dadurch gekennzeichnet, dass** die Pumpe eine Turbomolekularpumpe ist.
